# EUROPEAN PATENT APPLICATION

(11) **EP 2 421 192 A1**
(43) Date of publication of application: **22.02.2012**
(21) Application number: 10764421.3
(22) Date of filing: 12.04.2010
(51) Int. Cl.: H04L 7/02

(54) **RECEPTION APPARATUS**

(30) Priority: 14.04.2009 JP 2009097748
(71) Applicant: Thine Electronics, Inc., Tokyo 100-0005 (JP)
(72) Inventor: OZAWA Seiichi, Tokyo 100-0005 (JP)
(74) Representative: Price, Christopher
(86) International application number: PCT/JP2010/056522
(87) International publication number: WO 2010/119837

(57) **Abstract**

A reception apparatus is an apparatus for receiving serial data and includes a sampler portion, an edge detection portion, a logical addition operation portion, a timing determination portion, a register portion, a selector portion and a latch portion. The edge detection portion inputs data OSD[n] output from the sampler portion, performs an exclusive OR operation between the data OSD[n] and data OSD[n+1] which are adjacent to each other, and outputs data EDG[n] which is the result of the exclusive OR operation. The logical addition operation portion inputs the data EDG[n] output from the edge detection portion, performs, for a predetermined time period, an OR operation on the data EDG[n], with nₒ used as a reference value, with respect to each n which leaves a remainder of m when a difference (n - nₒ) is divided by a value M, and outputs data EDGFLG[m] which is the result of the OR operation.

## Description

### Technical Field

The present invention relates to an apparatus that receives serial data to be input.

### Background Art

As an apparatus that receives serial data to be input, an apparatus that uses oversampling technology is known. This type of reception apparatus samples serial data at a frequency M times (M is an integer of three or more) as high as the bit rate of the serial data, determines, based on data obtained by each sampling, a bit transition timing for the serial data and determines each bit value. A reception apparatus described in non-patent document 1 uses the oversampling technology, and is designed attempting to reduce delay in follow so as to cope with rapid jitter.

### Citation List

### Non Patent Literature

Non-patent document 1: Bong-Joon Lee, Moon-Sang Hwang, Jaeha Kim, "A Quad 3.125Gbps Transceiver Cell with All-Digital Data Recovery Circuits," 2005 Symposiumon VLSI Circuits Digest of Technical Papers 24-3

### Summary of Invention

### Technical Problem

However, since the reception apparatus described in non-patent document 1 needs to use a plurality of adders for averaging processing and the like, the reception apparatus has a large circuit size and it is difficult to increase its speed. The present invention is made to solve the foregoing problem and has an object to provide a reception apparatus that can reduce its circuit size and easily increases its speed.

### Solution to Problem

According to the present invention, there is provided a reception apparatus that receives serial data which is input, the reception apparatus including: (1) a sampler portion that samples the serial data at a frequency M times as high as a bit rate of the serial data and that sequentially outputs data OSD[n] obtained by n-th sampling; (2) an edge detection portion that inputs the data OSD[n] sequentially output from the sampler portion, that performs an exclusive OR operation between the data OSD[n] and data OSD[n+1] which are adjacent to each other, and that outputs data EDG[n] which is a result of the exclusive OR operation; (3) a logical addition operation portion that inputs the data EDG[n] output from the edge detection portion, that performs, for a predetermined time period, an OR operation on the data EDG[n], with nₒ used as a reference value, with respect to each n which leaves a remainder of m when a difference (n - nₒ) is divided by a value M, and that outputs data EDGFLG[m] which is a result of the OR operation; (4) a timing determination portion that inputs the data EDGFLG[m] output from the logical addition operation portion, that determines a bit transition timing of the serial data based on the data EDGFLG[m], and that outputs data PHSEL[m] which indicates the bit transition timing; (5) a register portion that inputs the data OSD[n] sequentially output from the sampler portion, that gives a delay of a predetermined time period to the data OSD[n], and that then sequentially outputs the data OSD[n]; and (6) a selector portion that inputs the data OSD[n] sequentially output from the register portion, that also inputs the data PHSEL[m] output from the timing determination portion and that outputs data OSD[n] which is selected from the data OSD[n] based on the data PHSEL[m]. Here, M is an integer of three or more; m is an integer of zero or more and less than M; and n is any integer.

In the reception apparatus of the present invention, the sampler portion samples the input serial data at the frequency M times as high as the bit rate of the input serial data and outputs the data OSD[n] obtained by the n-th sampling. The data OSD[n] output from the sampler portion is input to the edge detection portion. In the edge detection portion, the exclusive OR operation is performed between the data OSD[n] and the data OSD[n+1] which are adjacent to each other, and the data EDG[n] which is the result of the exclusive OR operation is output.

The data EDG[n] output from the edge detection portion is input to the logical addition operation portion. In the logical addition operation portion, the OR operation is performed on the data EDG[n], with nₒ used as a reference value, with respect to each n which leaves a remainder of m when a difference (n - nₒ) is divided by a value M, and the data EDGFLG[m] which is the result of the OR operation is output. The data EDGFLG[m] output from the logical addition operation portion is input to the timing determination portion. In the timing determination portion, the bit transition timing of the serial data is determined based on the data EDGFLG[m], and the data PHSEL[m] which indicates the bit transition timing is output.

The data OSD[n] output from the sampler portion is input to the register portion. In the register portion, the delay of a predetermined time period is given to the data OSD[n], and then the data OSD[n] is output. The data OSD[n] output from the register portion is input to the selector portion. The data PHSEL[m] output from the timing determination portion is also input to the selector portion. Then, in the selector portion, data OSD[n] which is selected from among the data OSD[n] based on the data PHSEL[m] is output.

Preferably, in the reception apparatus of the present invention, the logical addition operation portion includes: (a) a first operation portion that inputs the data EDG[n] output from the edge detection portion, that uses nₒ as a reference value, that performs an OR operation on the data EDG[n], with nₒ used as a reference value, with respect to each n which leaves a remainder of m when a difference (n - nₒ) is divided by a value M, and that outputs data EDGFLG0[m] which is a result of the OR operation; (b) a delay portion that inputs the data EDGFLG0[m] output from the first operation portion and that outputs data EDGFLG1[m] which is obtained by giving a delay of the given time period to the data EDGFLG0[m]; and (c) a second operation portion that inputs the data EDGFLG0[m] output from the first operation portion, that inputs the data EDGFLG1[m] output from the delay portion, that performs an OR operation between the data EDGFLG0[m] and the data EDGFLG1[m], and that outputs data EDGFLG[m] which is a result of the OR operation.

In this case, the data PHSEL[m] that is output from the timing determination portion and is input to the selector portion is determined based on not only the data OSD[n] output from the corresponding sampler portion but also the preceding data OSD[n].

Preferably, in the reception apparatus of the present invention, the logical addition operation portion includes: (a) a first operation portion that inputs the data EDG[n] output from the edge detection portion, that performs, for a given time period, an OR operation on the data EDG[n], with nₒ used as a reference value, with respect to each n which leaves a remainder of m when a difference (n - nₒ) is divided by a value M, and that outputs data EDGFLG0[m] which is a result of the OR operation; (b) a delay portion that inputs the data EDGFLG0[m] output from the first operation portion and that outputs data EDGFLG1[m] which is obtained by giving a delay of the given time period to the data EDGFLG0[m]; (c) a second delay portion that inputs the data EDGFLG1[m] output from the first delay portion and that outputs data EDGFLG2[m] which is obtained by giving a delay of the given time period to the data EDGFLG1[m]; and (d) a second operation portion that inputs the data EDGFLG0[m] output from the first operation portion, that inputs the data EDGFLG1[m] output from the first delay portion, that inputs the data EDGFLG2[m] output from the second delay portion, that performs an OR operation among the data EDGFLG0[m], the data EDGFLG1[m] and the data EDGFLG2[m], and that outputs data EDGFLG[m] which is a result of the OR operation.

In this case, the data PHSEL[m] that is output from the timing determination portion and is input to the selector portion is determined based on not only the data OSD[n] output from the corresponding sampler portion but also the preceding and subsequent data OSD[n].

Preferably, in the reception apparatus of the present invention, the timing determination portion determines the bit transition timing of the serial data in the center value of distribution of the data EDGFLG[m] output from the logical addition operation portion, and outputs the data PHSEL[m] indicating the bit transition timing. Preferably, when there are two or more pieces of data that are a value of 1 among the data EDGFLG[m] output from the logical addition operation portion, the timing determination portion determines the bit transition timing of the serial data on one of the two or more pieces of data that is close to a bit transition timing indicated by the prior data PHSEL[m], and outputs data PHSEL[m] indicating this bit transition timing.

### Advantageous Effects of Invention

Since the reception apparatus of the present invention does not need to use an adder, the reception apparatus can reduce its circuit size and easily increases its speed.

### Brief Description of Drawings

Fig. 1 is a diagram showing the configuration of a reception apparatus 1 according to a first embodiment;
Fig. 2 is a diagram illustrating the operations of a sampler portion 10, an edge detection portion 20, a logical addition operation portion 31 and a timing determination portion 40 included in the reception apparatus 1 according to the first embodiment;
Fig. 3 is a diagram illustrating the operation of the timing determination portion 40 included in the reception apparatus 1 according to the first embodiment;
Fig. 4 is a diagram illustrating the operation of the timing determination portion 40 included in the reception apparatus 1 according to the first embodiment;
Fig. 5 is a diagram illustrating the operation of the timing determination portion 40 included in the reception apparatus according to the first embodiment;
Fig. 6 is a diagram illustrating the operation of the timing determination portion 40 included in the reception apparatus 1 according to the first embodiment;
Fig. 7 is a diagram illustrating the operation of the timing determination portion 40 included in the reception apparatus 1 according to the first embodiment;
Fig. 8 is a diagram illustrating the operation of the timing determination portion 40 included in the reception apparatus 1 according to the first embodiment;
Fig. 9 is a diagram illustrating the operation of the timing determination portion 40 included in the reception apparatus 1 according to the first embodiment;
Fig. 10 is a diagram illustrating the operation timing of the reception apparatus 1 according to the first embodiment;
Fig. 11 is a diagram showing the configuration of a reception apparatus 2 according to a second embodiment;
Fig. 12 is a diagram illustrating the operation timing of the reception apparatus 2 according to the second embodiment;
Fig. 13 is a diagram showing the configuration of a reception apparatus 3 according to a third embodiment; and
Fig. 14 is a diagram illustrating the operation timing of the reception apparatus 3 according to the third embodiment.

### Description of Embodiments

Embodiments of the present invention will be described in detail below with reference to accompanying drawings. In the description of the drawings, the same elements are identified with common symbols, and their description will not be repeated.

(First embodiment)

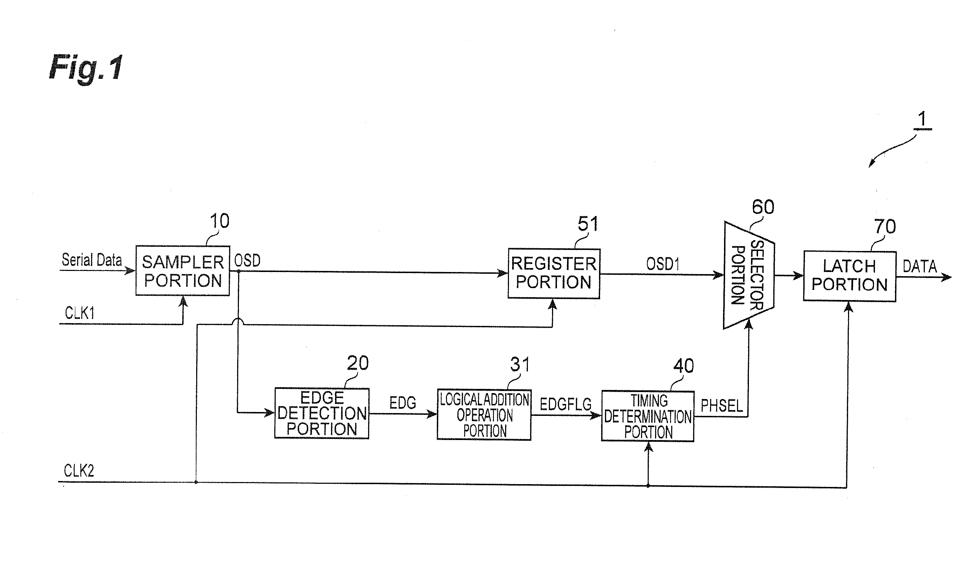

Fig. 1 is a diagram showing the configuration of a reception apparatus 1 according to a first embodiment. The reception apparatus 1 shown in this figure is an apparatus that receives serial data to be input; the reception apparatus 1 includes a sampler portion 10, an edge detection portion 20, a logical addition operation portion 31, a timing determination portion 40, a register portion 51, a selector portion 60 and a latch portion 70.

The sampler portion 10 inputs serial data that needs to be received and also inputs a sampling clock CLK1 having a frequency M times as high as the bit rate of the serial data. Then, the sampler portion 10 samples the serial data with a timing indicated by the sampling clock CLK1, and sequentially outputs data OSD[n] obtained by the n-th sampling. Here, M is an integer of three or more; n is any integer. In other words, data OSD[n+1] is a value that is obtained by sampling performed one sampling period after the sampling time of data OSD[n].

The edge detection portion 20 inputs the data OSD[n] that is sequentially output from the sampler portion 10. Then, the edge detection portion 20 performs an exclusive OR operation between the data OSD[n] and the data OSD[n+1] that are adjacent to each other, and outputs data EDG[n] that is the result of the exclusive OR operation. If the data EDG[n] output from the edge detection portion 20 is a value of 1, since the values of the data OSD[n] and the data OSD[n+1] are different from each other, this means that there is a possibility of the presence of a bit transition timing of the input serial data between the sampling times of the data OSD[n] and the data OSD[n+1].

The logical addition operation portion 31 inputs the data EDG[n] output from the edge detection portion 20. Then, the logical addition operation portion 31 performs, for a predetermined time period, an OR operation on the data EDG[n], with nₒ used as a reference value, with respect to each n which leaves the remainder of m when a difference (n - nₒ) is divided by the value M, and outputs data EDGFLG[m] that is the result of the OR operation. Here, m is any integer of zero or more and less than M.

The logical addition operation portion 31 performs such an OR operation for each predetermined time period. Here, the predetermined time period refers to a time period of a plurality of continuous bits (for example, 10 bits) of the input serial data. For example, if the value M is assumed to be 5, a period of 10 bits of the input serial data corresponds to a time period in which sampling is continuously performed 50 times by the sampler portion 10.

The timing determination portion 40 inputs the data EDGFLG[m] output from the logical addition operation portion 31. Then, the timing determination portion 40 determines, based on the data EDGFLG[m], the bit transition timing of the input serial data and outputs data PHSEL[m] that indicates the bit transition timing.

If the data EDGFLG[m] that is output from the logical addition operation portion 31 and is then input to the timing determination portion 40 is a value of 1, this means that there is a possibility of the presence of the bit transition timing of the input serial data with timing represented by the value m. On the other hand, if the data EDGFLG[m] is a value of 0, this means that there is a possibility that the bit transition timing of the input serial data is not present with the timing represented by the value m.

The timing determination portion 40 utilizes this to determine the bit transition timing of the input serial data. The timing determination portion 40 assumes that any one piece of data that indicates the bit transition timing of the input serial data among M pieces of data PHSEL[0] to PHSEL[M-1] is a value of 1, and that the other (M - 1) pieces of data is a value of 0.

The timing determination portion 40 may uniquely determine the data PHSEL[m] based on the data EDGFLG[m]; the timing determination portion 40 may determine the subsequent data PHSEL[m] based on the data EDGFLG[m] and the current data PHSEL[m]. In the case of the latter, the timing determination portion 40 is a so-called finite state machine.

The register portion 51 inputs data OSD[n] that is sequentially output from the sampler portion 10. Then, the register portion 51 gives the data OSD[n] a predetermined time delay, and sequentially outputs data OSD1[n] after the time delay was given. The delay time which the register portion 51 gives to the data OSD[n] is assumed to be a time period that is necessary for the edge detection portion 20, the logical addition operation portion 31 and the timing determination portion 40 to determine the data PHSEL[m] from the data OSD[n].

The selector portion 60 inputs the OSD1[n] that is sequentially output from the register portion 51, and also inputs the data PHSEL[m] that is output from the timing determination portion 40. Then, the selector portion 60 outputs the OSD1[n] that is selected from the OSD1[n] based in the data PHSEL[m]. The selector portion 60 utilizes the fact that the data PHSEL[m] indicates the bit transition timing of the input serial data, and thereby selects and outputs the OSD1[n] that is sampled with a timing intermediate between two continuous transition timings. The latch portion 70 inputs the OSD1[n] output from the selector portion 60, holds the data for a time period of one bit and outputs it as data DATA.

When each of the timing determination portion 40, the register portion 51 and the latch portion 70 performs processing for each of a plurality of continuous bits (for example, 10 bits) of the input serial data, the processing is performed in synchronization with a logic clock CLK2 having a frequency one-tenth as high as the bit rate of the input serial data.

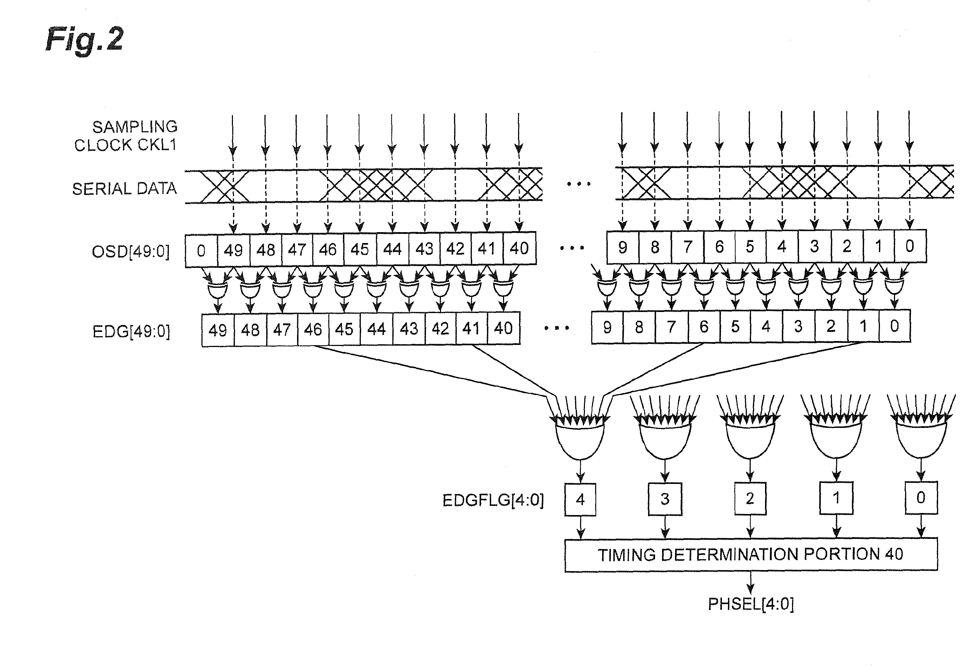

Fig. 2 is a diagram illustrating the operations of the sampler portion 10, the edge detection portion 20, the logical addition operation portion 31 and the timing determination portion 40 included in the reception apparatus 1 of the first embodiment. Hereinafter, a description will be given of a case where the value M is assumed to be 5, the sampling clock CLK1 having a frequency 5 times as high as the bit rate of the input serial data is used, the sampling is performed 50 times by the sampler portion 10 for a time period of continuous 10 bits of the input serial data and thus data OSD[0] to OLD[49] is obtained. In Fig. 2, a horizontal direction represents time and a vertical direction represents the flow of processing.

The sampler portion 10 can obtain 5 pieces of data OSD[n] for each time period of 1 bit of the input serial data and can obtain 50 pieces of data OSD[n] to OSD[49] for a time period of 10 bits of the input serial data. In the following description, OSD[n] to OSD[49] is also referred to as OSD[49:0]. The data OSD[49:0] output from the sampler portion 10 is input to the edge detection portion 20.

The edge detection portion 20 performs an exclusive OR operation between the data OSD[n] and the data OSD[n+1] that are adjacent to each other, and outputs the data EDG[n] that is the result of the exclusive OR operation. That is, the data EDG[n] is represented by a formula "EDG[n] = OSD[n+1] xor OSD[n]." However, when n = 49, the data EDG[49] is represented by a formula "EDG[49] = OSD[0] xor OSD[49]" using the data OSD[0] among 50 pieces of the data OSD[0] to OSD[49] obtained for the preceding time period of 10 bits. The edge detection portion 20 can obtain 50 pieces of data EDG[0] to EDG[49]. In the following description, EDG[0] to EDG[49] is also referred to as EDG[49:0]. The data EDG[49:0] output from the edge detection portion 20 is input to the logical addition operation portion 31.

The logical addition operation portion 31 determines five pieces of data EDGFLG[0] to EDGFLG[4] based on 50 pieces of data EDG[49:0]. The value of the data EDGFLG[0] is the value of the logical addition of each value of data EDG[2], EDG[7], EDG[12], ... , EDG[5k+2], ..., EDG[47]. The value of the data EDGFLG[1] is the value of the logical addition of each value of data EDG[3], EDG[8], EDG[13], ... , EDG[5k+3], ..., EDG[48]. The value of the data EDGFLG[2] is the value of the logical addition of each value of data EDG[4], EDG[9], EDG[14], ... , EDG[5k+4], ..., EDG[49]. The value of the data EDGFLG[3] is the value of the logical addition of each value of data EDG[0], EDG[5], EDG[10], ... , EDG[5k], ..., EDG[45]. The value of the data EDGFLG[4] is the value of the logical addition of each value of data EDG[1], EDG[6], EDG[11], ... , EDG[5k+1], ..., EDG[46]. Here, k is an integer. In this way, five pieces of data EDGFLG[0] to EDGFLG[4] can be obtained. In the following description, EDGFLG[0] to EDGFLG[4] is also referred to as EDGFLG[4:0]. The data EDGFLG[4:0] output from the logical addition operation portion 31 is input to the timing determination portion 40.

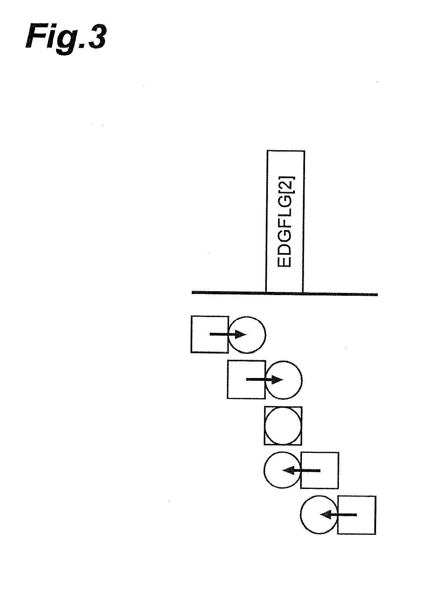

The timing determination portion 40 determines, based on the data EDGFLG[4:0], the data PHSEL[m] that indicates the bit transition timing. In the following description, PHSEL[0] to PHSEL[4] is also referred to as PHSEL[4:0]. With reference to Figs. 3 to 9, a case where the timing determination portion 40 that is a finite state machine determines the subsequent data PHSEL[4:0] based on the data EDGFLG[4:0] and the current data PHSEL[4:0] will be described.

Figs. 3 to 9 are diagrams illustrating the operation of the timing determination portion 40 included in the reception apparatus 1 according to the first embodiment. In these figures, the horizontal axis represents a value m, □ represents the value m that is a value of 1 among the current data PHSEL[4:0] and ○ represents the value m that is a value of 1 among the subsequent data PHSEL[4:0]. In the following description, when only the data PHSEL[4] among the data PHSEL[4:0] is a value of 1, the value of the data PHSEL[4:0] is referred to as [10000].

As shown in Fig. 3, when only the data EDGFLG[2] among the data EDGFLG[4:0] is a value of 1, if the current data PHSEL[4:0] is a value [10000], the subsequent data PHSEL[4:0] is set at a value [01000], if the current data PHSEL[4:0] is a value [01000], [00100] or [00010], the subsequent data PHSEL[4:0] is set at a value [00100], and if the current data PHSEL[4:0] is a value [00001], the subsequent data PHSEL[4:0] is set at a value [00010].

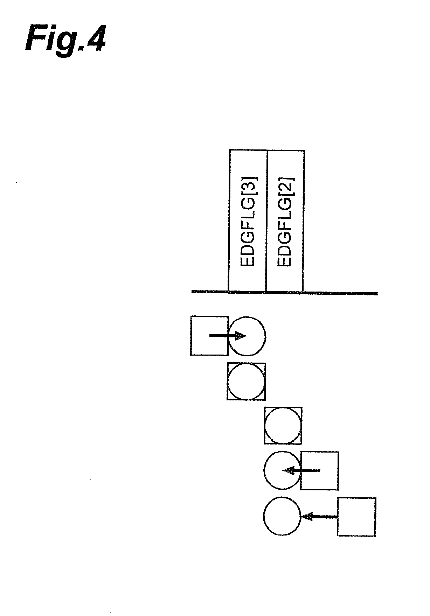

As shown in Fig. 4, when the two pieces of data EDGFLG[3] and EDGFLG[2] among the data EDGFLG[4:0] are a value of 1, if the current data PHSEL[4:0] is a value [10000] or [01000], the subsequent data PHSEL[4:0] is set at a value [01000] and if the current data PHSEL[4:0] is a value [00100], [00010] or [00001], the subsequent data PHSEL[4:0] is set at a value [00100].

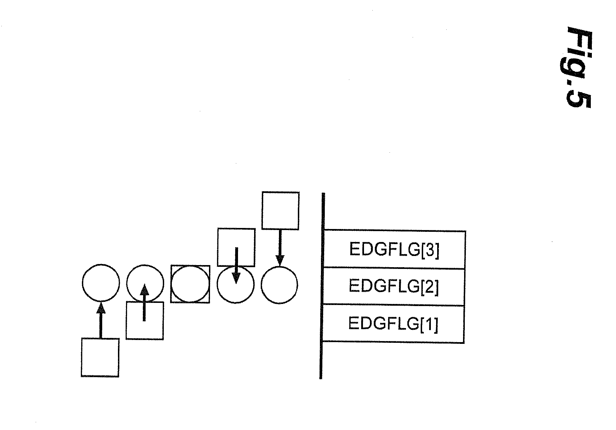

As shown in Fig. 5, when the three pieces of data EDGFLG[3] to EDGFLG[1] among the data EDGFLG[4:0] are a value of 1, even if the current data PHSEL[4:0] is any of values [10000] to [00001], the subsequent data PHSEL[4:0] is set at a value [00100].

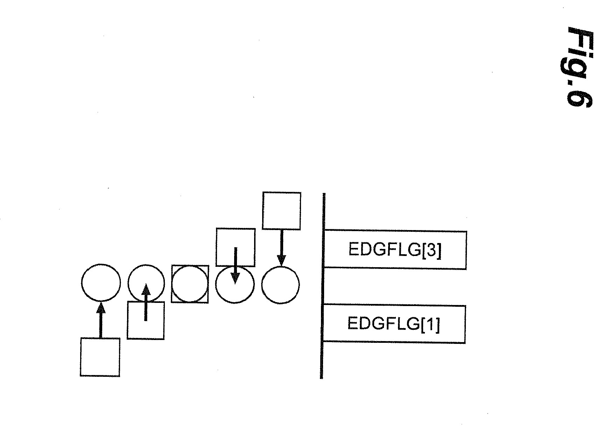

As shown in Fig. 6, when the two pieces of data EDGFLG[3] and EDGFLG[1] among the data EDGFLG[4:0] are a value of 1, even if the current data PHSEL[4:0] is any of values [10000] to [00001], the subsequent data PHSEL[4:0] is set at a value [00100].

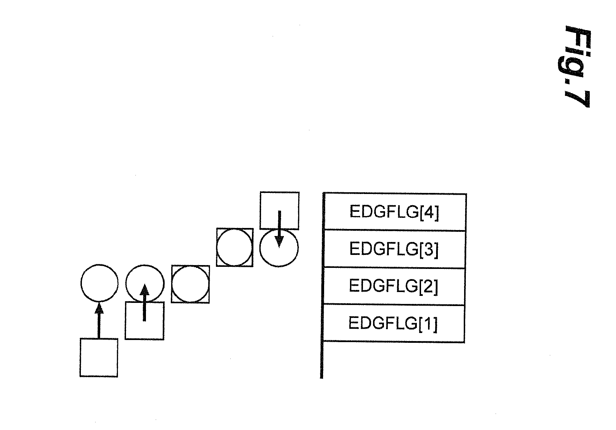

As shown in Fig. 7, when the four pieces of data EDGFLG[4] to EDGFLG[1] among the data EDGFLG[4:0] are a value of 1, if the current data PHSEL[4:0] is a value [10000] or [01000], the subsequent data PHSEL[4:0] is set at a value [01000] and if the current data PHSEL[4:0] is a value [00100], [00010] or [00001], the subsequent data PHSEL[4:0] is set at a value [00100].

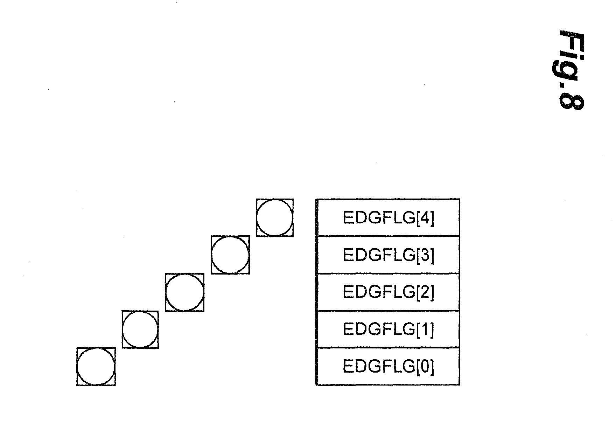

As shown in Fig. 8, when all pieces of data EDGFLG[4:0] are a value of 1, the current data PHSEL[4:0] is used as the subsequent data PHSEL[4:0] without being processed.

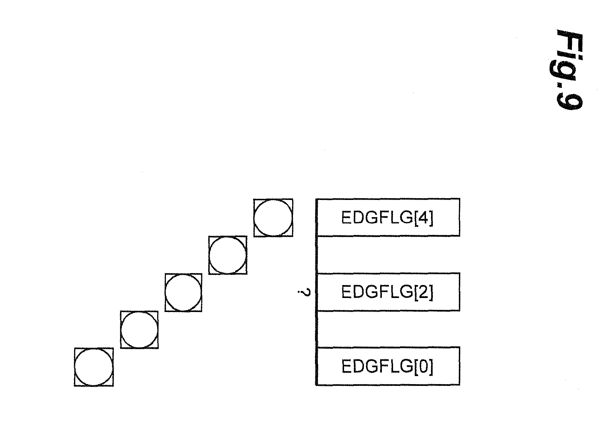

As shown in Fig. 9, when the three pieces of data EDGFLG[4], EDGFLG[2] and EDGFLG[0] among the data EDGFLG[4:0] are a value of 1, the current data PHSEL[4:0] is used as the subsequent data PHSEL[4:0] without being processed.

Basically, the subsequent data PHSEL[4:0] is selected such that the subsequent data PHSEL[4:0] is moved to the center of the distribution of the data EDGFLG[4:0]; if two pieces or more of data among the data EDGFLG[4:0] are a value of 1, the piece of data close to the preceding data PHSEL[4:0] is selected. If the center value of the distribution of the data EDGFLG[4:0] cannot be determined (Figs. 8 and 9), the current data PHSEL[4:0] is used as the subsequent data PHSEL[4:0] without being processed.

As described above, the timing determination portion 40 determines the bit transition timing of the input serial data, and the data PHSEL[4:0] indicating this bit transition timing is output from the timing determination portion 40 and is input to the selector portion 60. A delay is given by the register portion 51 to the data OSD[49:0] output from the sampler portion 10, and the data OSD1[49:0] receiving the delay is input to the selector portion 60.

In the selector portion 60, the data OSD1[n] that is sampled based on the fact that the data PHSEL[4:0] indicates the bit transition timing of the input serial data with an intermediate timing between continuous two transition timings is selected from the data OSD1[49:0] and is output. Then, the latch portion 70 holds the data OSD1[n] output from the selector portion 60 and outputs it as the DATA[9:0].

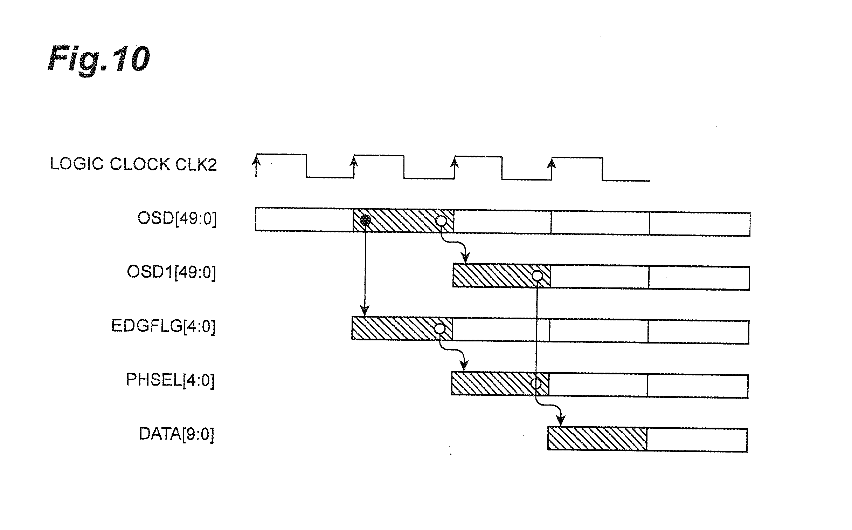

Fig. 10 is a diagram illustrating the operation timing of the reception apparatus 1 according to the first embodiment. This figure shows the logic clock CLK2, the data OSD[49:0] output from the sampler portion 10, the data OSD1[49:0] output from the register portion 51, the data EDGFLG[4:0] output from the logical addition operation portion 31, the data PHSEL[4:0] output from the timing determination portion 40 and the data DATA[9:0] output from the latch portion 70 and individual timings. In the figure, the hatched data is generated based on the common data OSD[49:0].

As shown in the figure, the data OSD1[49:0] that is output from the register portion 51 and is input to the selector portion 60 and the data PHSEL[4:0] that is output from the timing determination portion 40 and is input to the selector portion 60 are delayed by one period of the logic clock CLK2 with reference to the data OSD[49:0] output from the sampler portion 10.

Since the reception apparatus 1 of the first embodiment performs an OR operation in the logical addition operation portion 31 on the result of an exclusive OR operation performed by the edge detection portion 20, and determines, in the timing determination portion 40, the bit transition timing based on the result of the OR operation, the circuit size can be reduced, and the speed thereof is easily increased.

(Second embodiment)

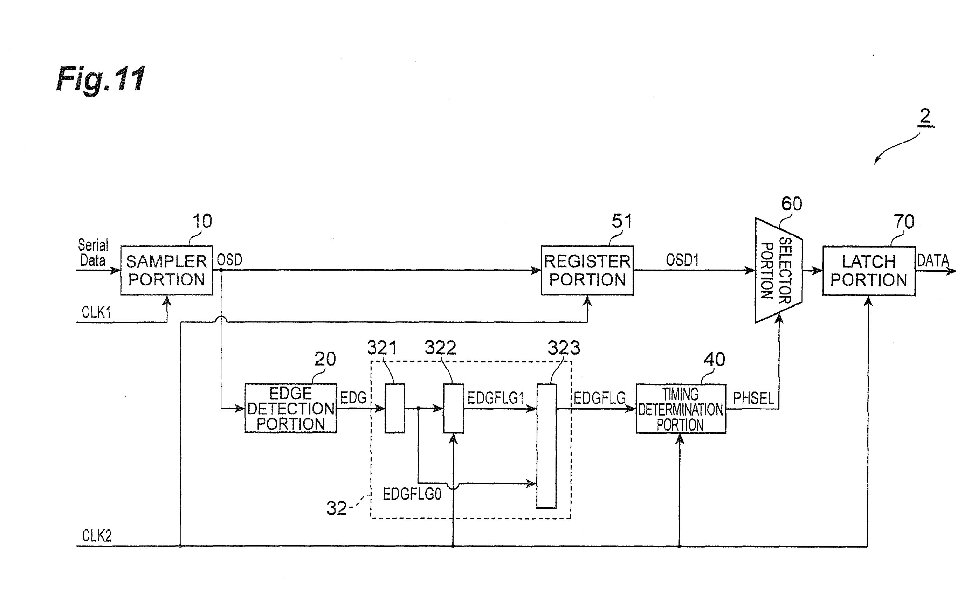

Fig. 11 is a diagram showing the configuration of a reception apparatus 2 according to a second embodiment. The reception apparatus 2 shown in this figure is an apparatus that receives serial data to be input; the reception apparatus 2 includes the sampler portion 10, the edge detection portion 20, the logical addition operation portion 31, the timing determination portion 40, the register portion 51, the selector portion 60 and the latch portion 70.

The reception apparatus 2 according to the second embodiment shown in Fig. 11 differs from the reception apparatus 1 according to the first embodiment shown in Fig. 1 in that, instead of the logical addition operation portion 31, a logical addition operation portion 32 is included.

The logical addition operation portion 32 includes a first operation portion 321, a delay portion 322 and a second operation portion 323. As with the logical addition operation portion 31 of the first embodiment, the first operation portion 321 inputs the data EDG[n] output from edge detection portion 20, and performs, for a predetermined time period, an OR operation on the data EDG[n], with nₒ used as a reference value, with respect to each n which leaves the remainder of m when a difference (n - nₒ) is divided by the value M, and outputs data EDGFLG0[m] that is the result of the OR operation.

The delay portion 322 inputs the data EDGFLG0[m] output from the first operation portion 321, and outputs the data EDGFLG1[m] obtained by giving a delay of a predetermined time period to the data EDGFLG0[m]. The second operation portion 323 inputs the data EDGFLG0[m] output from the first operation portion 321, and inputs the data EDGFLG1[m] output from the delay portion 322. Then, the second operation portion 323 performs an OR operation between the data EDGFLG0[m] and the data EDGFLG1[m], and outputs, to the timing determination portion 40, the data EDGFLG[m] that is the result of the OR operation.

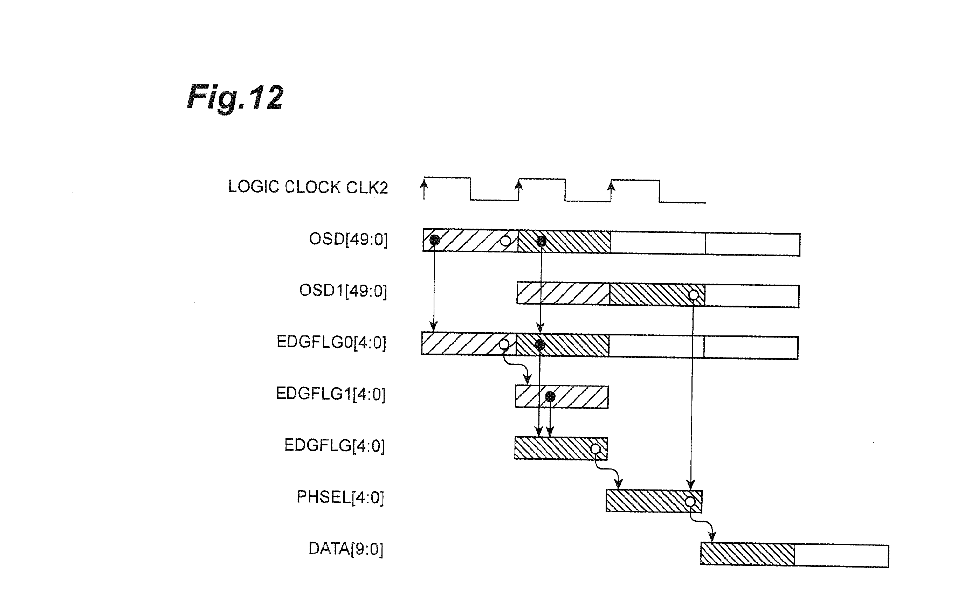

Fig. 12 is a diagram illustrating the operation timing of the reception apparatus 2 according to the second embodiment. This figure shows the timings of the data OSD[49:0] output from the logic clock CLK2 and the sampler portion 10, the data OSD1[49:0] output from the register portion 51, the data EDGFLG0[4:0] output from the first operation portion 321, the data EDGFLG1 [4:0] output from the delay portion 322, the data EDGFLG[4:0] output from the second operation portion 323, the data PHSEL[4:0] output from the timing determination portion 40 and the DATA[9:0] output from the latch portion 70. The hatched data in this figure is generated based on the common data OSD[49:0].

As shown in this figure, the data PHSEL[4:0] that is output from the timing determination portion 40 and is input to the selector portion 60 is determined based on not only the data OSD[49:0] of 10 bits output from the corresponding sampler portion 10 but also the preceding data OSD[49:0] of 10 bits.

Hence, the reception apparatus 2 of the second embodiment has the same effects as the reception apparatus 1 of the first embodiment, and can also determine the bit transition timing more stably.

(Third embodiment)

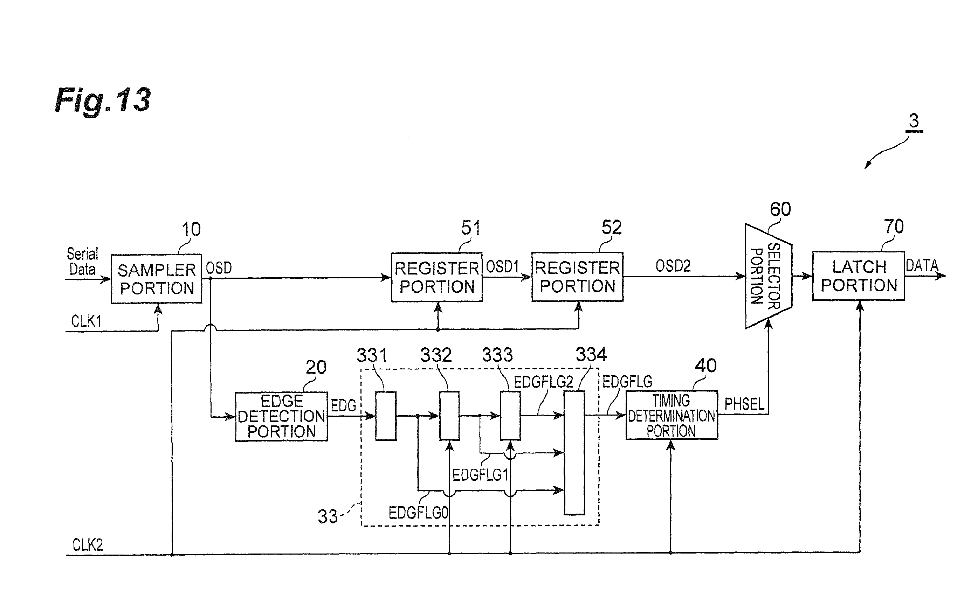

Fig. 13 is a diagram showing the configuration of a reception apparatus 3 according to a third embodiment. The reception apparatus 3 shown in this figure is an apparatus that receives serial data to be input; the reception apparatus 3 includes the sampler portion 10, the edge detection portion 20, a logical addition operation portion 33, the timing determination portion 40, the register portion 51, a register portion 52, the selector portion 60 and the latch portion 70.

The reception apparatus 3 according to the third embodiment shown in Fig. 13 differs from the reception apparatus 1 according to the first embodiment shown in Fig. 1 in that, instead of the logical addition operation portion 31, the logical addition operation portion 33 is included and that not only the register portion 51 but also the register portion 52 is included.

The logical addition operation portion 33 includes a first operation portion 331, a first delay portion 332, a second delay portion 333 and a second operation portion 334. As with the logical addition operation portion 31 of the first embodiment, the first operation portion 331 inputs the data EDG[n] output from edge detection portion 20, and performs, for a predetermined time period, an OR operation on the data EDG[n], with nₒ used as a reference value, with respect to each n which leaves the remainder of m when a difference (n - nₒ) is divided by the value M, and outputs data EDGFLG[m] that is the result of the OR operation.

The first delay portion 332 inputs the data EDGFLG0[m] output from the first operation portion 331, and outputs the data EDGFLG1[m] obtained by giving a delay of a predetermined time period to the data EDGFLG0[m]. The second delay portion 333 inputs the data EDGFLG1[m] output from the first operation portion 331, and outputs the data EDGFLG2[m] obtained by giving a delay of a predetermined time period to the data EDGFLG1[m].

The second operation portion 334 inputs the data EDGFLG0[m] output from the first operation portion 331, inputs the data EDGFLG1[m] output from the first delay portion 332 and inputs the data EDGFLG2[m] output from the second delay portion 333. Then, the second operation portion 334 performs an OR operation among the data EDGFLG0[m], the data EDGFLG1[m] and the data EDGFLG2[m], and outputs, to the timing determination portion 40, the data EDGFLG[m] that is the result of the OR operation.

The register portion 52 gives the same delay as the delay given by the register portion 51 to the data OSD1[n] output from the register portion 51, and outputs the data OSD2[n] receiving the delay to a selector portion 70.

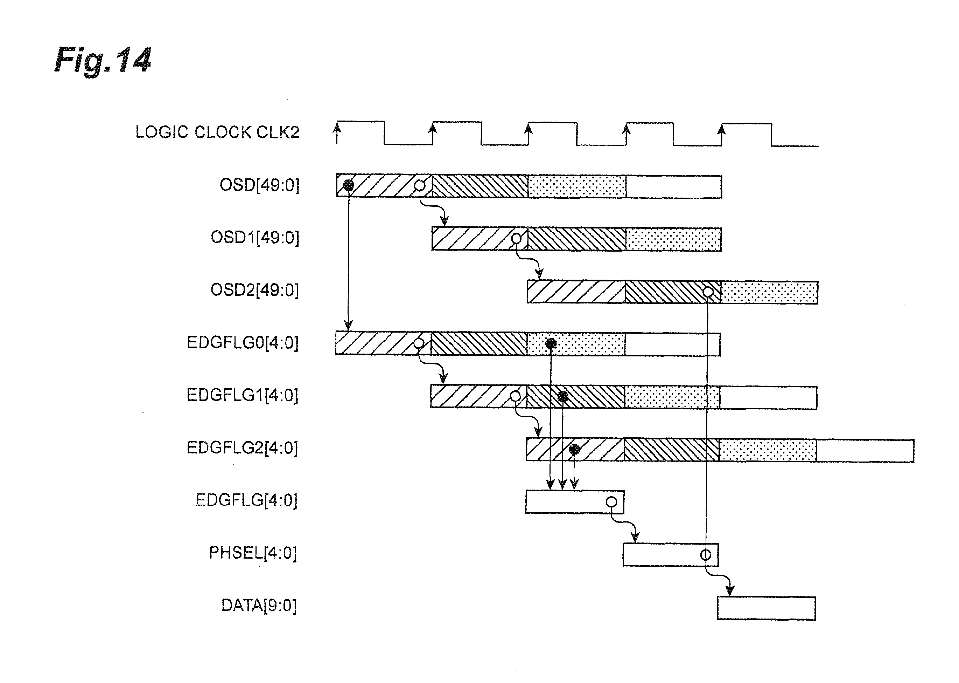

Fig. 14 is a diagram illustrating the operation timing of the reception apparatus 23 according to the third embodiment. This figure shows the timings of the data OSD[49:0] output from the logic clock CLK2 and the sampler portion 10, the data OSD1[49:0] output from the register portion 51, the data OSD2[49:0] output from the register portion 52, the data EDGFLG0[4:0] output from the first operation portion 331, the data EDGFLG1[4:0] output from the delay portion 332, the data EDGFLG2[4:0] output from the second delay portion 333, the data EDGFLG[4:0] output from the second operation portion 334, the data PHSEL[4:0] output from the timing determination portion 40 and the DATA[9:0] output from the latch portion 70. The hatched data in this figure is generated based on the common data OSD[49:0].

As shown in this figure, the data PHSEL[4:0] that is output from the timing determination portion 40 and is input to the selector portion 60 is determined based on not only the data OSD[49:0] of 10 bits output from the corresponding sampler portion 10 but also the preceding and subsequent data OSD[49:0] of 10 bits.

Hence, the reception apparatus 3 of the third embodiment has the same effects as the reception apparatus 1 of the first embodiment, and can also determine the bit transition timing more stably.

### Industrial Applicability

The present invention can be applied to uses in which the size of a circuit of a reception apparatus is reduced and the speed thereof is increased.

### Reference Signs List

- 1 to 3: Reception apparatus
- 10: Sampler portion
- 20: Edge detection portion
- 31 to 33: Logical addition operation portion
- 40: Timing determination portion
- 51 and 52: Register portion
- 60: Selector portion
- 70: Latch portion

## Claims

1. A reception apparatus that receives serial data to be input, the reception apparatus comprising:
a sampler portion that samples the serial data at a frequency M times as high as a bit rate of the serial data and that sequentially outputs data OSD[n] obtained by n-th sampling;
an edge detection portion that inputs the data OSD[n] sequentially output from the sampler portion, that performs an exclusive OR operation between the data OSD[n] and data OSD[n+1] which are adjacent to each other, and that outputs data EDG[n] which is a result of the exclusive OR operation;
a logical addition operation portion that inputs the data EDG[n] output from the edge detection portion, that performs, for a predetermined time period, an OR operation on the data EDG[n], with nₒ used as a reference value, with respect to each n which leaves a remainder of m when a difference (n - nₒ) is divided by a value M, and that outputs data EDGFLG[m] which is a result of the OR operation;
a timing determination portion that inputs the data EDGFLG[m] output from the logical addition operation portion, that determines a bit transition timing of the serial data based on the data EDGFLG[m], and that outputs data PHSEL[m] which indicates the bit transition timing;
a register portion that inputs the data OSD[n] sequentially output from the sampler portion, that gives a delay of a predetermined time period to the data OSD[n], and that then sequentially outputs the data OSD[n]; and
a selector portion that inputs the data OSD[n] sequentially output from the register portion, that also inputs the data PHSEL[m] output from the timing determination portion and that outputs data OSD[n] which is selected from among the data OSD[n] based on the data PHSEL[m] (where M is an integer of three or more; m is an integer of zero or more and less than M; and n is any integer).

2. The reception apparatus of claim 1,
wherein the logical addition operation portion includes:
a first operation portion that inputs the data EDG[n] output from the edge detection portion, that performs, for a given time period, an OR operation on the data EDG[n], with nₒ used as a reference value, with respect to each n which leaves a remainder of m when a difference (n - nₒ) is divided by a value M, and that outputs data EDGFLG0[m] which is a result of the OR operation;
a delay portion that inputs the data EDGFLG0[m] output from the first operation portion and that outputs data EDGFLG1[m] which is obtained by giving a delay of the given time period to the data EDGFLG0[m]; and
a second operation portion that inputs the data EDGFLG0[m] output from the first operation portion, that inputs the data EDGFLG1[m] output from the delay portion, that performs an OR operation between the data EDGFLG0[m], and the data EDGFLG1[m] and that outputs data EDGFLG[m] which is a result of the OR operation.

3. The reception apparatus of claim 1,
wherein the logical addition operation portion includes:
a first operation portion that inputs the data EDG[n] output from the edge detection portion, that performs, for a given time period, an OR operation on the data EDG[n], with nₒ used as a reference value, with respect to each n which leaves a remainder of m when a difference (n - nₒ) is divided by a value M, and that outputs data EDGFLG0[m] which is a result of the OR operation;
a delay portion that inputs the data EDGFLG0[m] output from the first operation portion and that outputs data EDGFLG1[m] which is obtained by giving a delay of the given time period to the data EDGFLG0[m];
a second delay portion that inputs the data EDGFLG1[m] output from the first delay portion and that outputs data EDGFLG2[m] which is obtained by giving a delay of the given time period to the data EDGFLG1[m]; and
a second operation portion that inputs the data EDGFLG1[m] output from the first operation portion, that inputs the data EDGFLG1[m] output from the first delay portion, that inputs the data EDGFLG2[m] output from the second delay portion, that performs an OR operation among the data EDGFLG0[m], the data EDGFLG1[m] and the data EDGFLG2[m], and that outputs data EDGFLG[m] which is a result of the OR operation.

4. The reception apparatus of claim 1,
wherein the timing determination portion determines the bit transition timing of the serial data in a center value of distribution of the data EDGFLG[m] output from the logical addition operation portion, and outputs the data PHSEL[m] indicating the bit transition timing.

5. The reception apparatus of claim 1,
wherein, when there are two or more pieces of data that are a value of 1 among the data EDGFLG[m] output from the logical addition operation portion, the timing determination portion determines the bit transition timing of the serial data on one of the two or more pieces of data that is close to a bit transition timing indicated by the prior data PHSEL[m], and outputs data PHSEL[m] indicating this bit transition timing.
